# EUROPEAN PATENT SPECIFICATION

(11) **EP 4 312 313 B1**
(45) Date of publication and mention of the grant of the patent: **07.10.2026**
(21) Application number: 23187561.8
(22) Date of filing: 25.07.2023
(51) Int. Cl.: H01R 4/20, H01R 9/05, H01R 13/6591, H01R 13/6592

(54) **ELECTRICAL CONNECTOR HAVING A FERRULE AND A CRIMP PORTION AND METHOD FOR MANUFACTURING A CABLE THEREWITH**
ELEKTRISCHER VERBINDER MIT EINER HÜLSE UND EINEM CRIMP-TEIL UND VERFAHREN ZUR HERSTELLUNG EINES KABELS MIT DIESEM VERBINDER
CONNECTEUR ÉLECTRIQUE COMPORTANT UNE FERRULE ET UNE PARTIE À SERTIR ET PROCÉDÉ DE FABRICATION D'UN CÂBLE À L'AIDE DE CE CONNECTEUR

(30) Priority: 28.07.2022 GB 202211001
(43) Date of publication of application: 31.01.2024
(73) Proprietor: Aptiv Technologies AG, 8200 Schaffhausen (CH)
(72) Inventor: Wojtula, Michal, 30-720 Kraków (PL); Wrzesien, Dominik, 26-200 Konskie (PL); Kruczek, Pawel, 31-101 Kraków (PL); Sikora, Maciej, 32-060 Liszki (PL)
(74) Representative: INNOV-GROUP

(56) References cited:
- JP-A- 2006 310 139
- US-A1- 2013 098 680

## Description

### TECHNICAL FIELD

The present disclosure relates in general to the field of electrical cables, and in particular to an electrical connector for a high voltage electrical cable and to a method for manufacturing an electrical cable. The electrical cables are intended to be used in any kind of industries, in particular automotive industry.

### TECHNICAL BACKGROUND

Shielded electrical cables are known. For example, the document KR20180045216A discloses a braided shield having a complex connection. Further, the document US5033982 discloses an electrical connector for high voltage having a plastic shield. US20130098680A1 and JP2006310139A disclose ferrules electrically connected to a shielding braid.

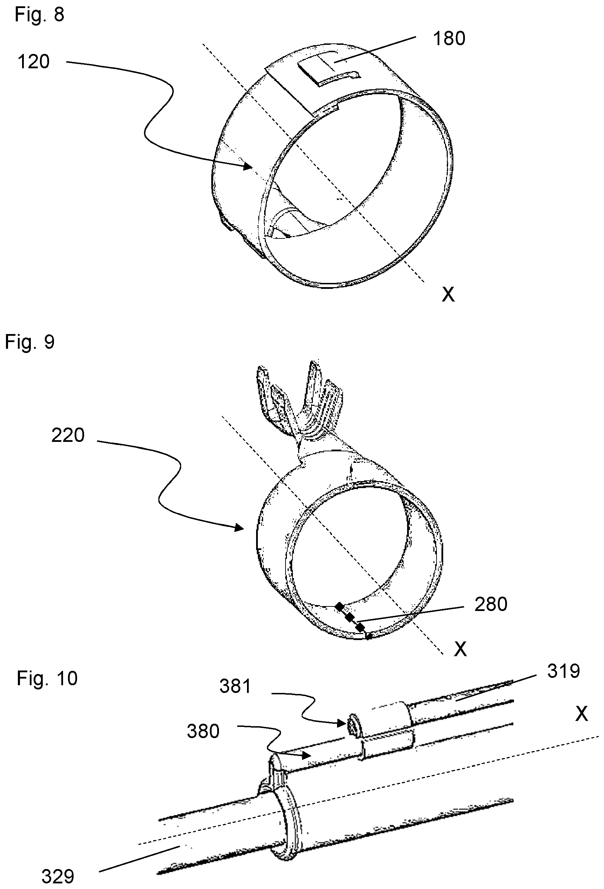

Further, designs with a ferrule to be connected to an electrical shield are known in the art. For example, as shown in figure 8 of the present description, a ferrule is provided with a protrusion so as to fix two wound portions of the ferrule. Another example known in the art is the ferrule of figure 9 of the present description, with a ferrule having a weld so as to fix two wounded portions of the ferrule. However, in the two latter ferrules, there is a problem of break or reopening of the ferrule when the ferrule is crimped on the electrical shield, in particular when this crimping is done thanks to a press, a tool or the like, or when there are vibrations in use. That is, the electrical connection between the ferrule and the electrical shield is poor or lost, and the ferrule may fall from the wire or from the electrical shield on which it is crimped. In addition, there is the possibility to provide the weld on an inner side and on an outer side of the ferrule, but it is both not sufficient and costly. The same applies even the weld is fully penetrating the ring of the ferrule, so as to have a complete welding: this may not be sufficient to avoid a break of the weld, and this is also time consuming and costly. In addition, this may require an additional inspection of the ferrule to check the integrity of the ferrule (i.e. no break or no beginning of rupture). Still another example known in the art is illustrated in figure 10 of the present description, and is about an electrical shield provided with an outer portion in the longitudinal direction, along with a clip for assembling the outer portion of the electrical shield with an accessory cable (i.e. second cable, to be compared with a main cable, i.e. first cable) to be connected with the electrical shield, so as to perform the function of shielding. That is, with the clip, there is a risk to loosen the electrical connection between the braids of both the electrical shield and the accessory cable. Further, there is a risk of unstable connection resistance, which is changing after every cable movement, and a risk of loosening or break of the accessory cable, in particular at the level of the clip. The same applies with an assembly with a shrinking tube instead of the clip.

Thereby, there is a need for solving the above mentioned drawback, and in particular the problem of electromagnetic induced current on the shield for high current application, while improving the lifetime of the connection of the shield and providing a simple connection. That is, there is a need of improvement of the connection between the accessory cable (i.e. second cable to be compared with a main cable, i.e. first cable) and the electrical shield. Further, there is a need for improvement of the manufacturing of the ferrule, and in particular during the crimping process, which creates some stress and load on the ferrule, leading to unwanted break of the ferrule.

### SUMMARY

One aim of the present disclosure is, in a first aspect, to solve the drawbacks of the prior art by providing an electrical connector as defined in claim 1.

The high voltage electrical cable may be also called electrical cable or cable. The crimp portion may be also called extended portion.

The ferrule is arranged to fasten the cable shield and electrically connect the cable shield with the second conductive wire, via the crimp portion.

This allows to propose a clean, easy and safe assembly and to improve the lifetime connection of the shield and the connection of the two annular portions of the ferrule, in particular after the crimping process of the ferrule onto the electrical shield. Further, this can be used with different cable sizes and shield wires, which means this is scalable. Still further, this allows for an easier manufacturing with a safe and repeatable processing, which could be parametric. Still further, this allows for different crimp variants of the ferrule, which is thereby modular and easily adaptable to a wide variety of design. In particular, the crimping may be circular, hexagonal or cat ear crimp, not being limited to theses shapes. Still further, this allows for a free orientation but it can be also used in a specified or defined position. In addition, the usage of these ferrules avoids broken shield strands and the shield strands orientation may be given by the ferrule. Besides, this allows to enhance the electromagnetic compatibility of the electrical cable.

In addition, this allows to avoid any break of the ferrule after the crimping process. Indeed, the orientation of the free end of the at least one clinched arm allows to reduce the stress and the constraint on the ferrule during and after the crimping process, and allows to avoid or reduce the risk of break or loose of the ferrule, in particular at the level of the at least one clinched arm. That is, this solution eliminates possibility of disconnection during crimping process due to the fact that the at least one clinched arm is perpendicular to the sheet metal movement (i.e. to the movement of the ferrule, or the movement of an inner part or outer part of the ferrule).

Advantageously, a rotation axis of the clinched arm during bending or folding of the at least one clinched arm is perpendicular to the longitudinal direction.

Advantageously, the at least one clinched arm is arranged to be bent or folded back in the longitudinal direction.

Advantageously, the clinched arm is arranged to cover an outer cylindrical surface of the other of the two annular portions.

This allows to reduce the stress and constraint during and after the crimping process as mentioned above.

Advantageously, the two annular portions are halve portions wounded so as to be assembled together and linked by the at least one clinched arm. The halve portions are preferably made out of a sheet of metal, such as steel or copper, or any suitable material, in particular conductive materials.

Advantageously, the other of the two annular portions has at least one abutting portion arranged to abut with the at least one clinched arm.

Advantageously, the abutting portion is a stop lock portion, allowing to stop and lock the movement of the annular portions.

Advantageously, the other of the two annular portions has at least one recess portion arranged to receive the at least one clinched arm.

Advantageously, the at least one clinched arm is arranged at an end of the one of the two annular portions.

This allows to ensure a correct positioning of the two annular portions, of the clinched arm and the abutting portions, thereby leading to the correct shape of the ferrule, while reducing the stress.

Advantageously, the ferrule, the crimp portion and the cable shield comprise a conductive material, such as metal (copper, aluminum, steel, not being limited to such materials).

Advantageously, the ferrule may be crimped on a portion of the cable shield.

Advantageously, the ferrule may have an inner part and an outer part, and the ferrule is arranged to sandwich the portion of the cable shield between the inner part and the outer part.

Advantageously, the inner part may have a shoulder portion arranged to abut the outer part.

This allows for a simplified and more robust electrical connection and fastening, while improving the lifetime. Further, this allows to improve the shield strand orientation and to avoid any broken shield strands. Still further, this allows for a simplified and more robust connection of the components of the ferrule, and a more precise manufacturing.

Advantageously, the crimp portion may have at least one first arm arranged to be crimped on a conductive portion of the second conductive wire.

Advantageously, the crimp portion may have at least one second arm arranged to be crimped on a insulation portion of the second conductive wire.

Advantageously, the crimp portion may have at least one attachment arm partly arranged in at least one opening of the outer part or in at least one opening of the ferrule.

This allows to provide a simplified and robust connection between the ferrule and the second conductive wire and between the outer part and the crimp portion.

Advantageously, the at least one attachment arm is arranged to surround the portion of the cable shield.

This allows to provide a simplified and robust connection between the ferrule and cable shield.

Advantageously, the crimp portion is integral with the outer part or with the ferrule.

This allows for a simplified construction of the electrical connector and an easier manufacturing of the electrical connector.

Advantageously, the at least one first arm has at least one recess.

Advantageously, the crimp portion is arranged to be outside the first conductive wire when mounted on the electrical cable, at least partially.

This allows to divert the induced current in the cable shield outside the first conductive wire, through the conductive portion of the second conductive wire.

One aim of the present disclosure is, in a background example not covered by the **claims,** to propose an electrical cable for high voltage current, having:
- a first conductive wire,
- a cable shield arranged to electrically shield the first conductive wire,
characterized in that the electrical cable further has a second conductive wire, and an electrical connector according to the first aspect, in particular having a ferrule arranged to fasten and electrically connect the cable shield and the second conductive wire.

This allows to propose a clean, easy and safe assembly and to improve the lifetime connection of the shield. Further, this can be used with different cable sizes and shield wires, which means this is scalable. Still further, this allows for an easier manufacturing with a safe and repeatable processing, which could be parametric. Still further, this allows for different crimp variants of the ferrule and the electrical connector, which is thereby modular and easily adaptable to a wide variety of design. In particular, the crimping may be circular, hexagonal or cat ear crimp, not being limited to theses shapes. Still further, this allows for a free orientation but it can be also used in a specified or defined position. In addition, the usage of these ferrules avoids broken shield strands and the shield strands orientation may be given by the ferrule. Besides, this allows to enhance the electromagnetic compatibility of the electrical cable.

In addition, this allows to avoid any break of the ferrule after the crimping process. Indeed, the orientation of the free end of the at least one clinched arm allows to reduce the stress and the constraint on the ferrule during and after the crimping process, and allows to avoid or reduce the risk of break or loose of the ferrule, in particular at the level of the at least one clinched arm. That is, this solution eliminates possibility of disconnection during crimping process due to the fact that the at least one clinched arm is perpendicular to the sheet metal movement (i.e. to the movement of the ferrule, or the movement of an inner part or outer part of the ferrule).

Advantageously, the ferrule may be crimped (or pinched or fastened or attached) on a portion of the cable shield.

Advantageously, the ferrule may be made out of a conductive material, such as metal, copper, steel, stainless steel, or the like.

Advantageously, the cable shield may have a plurality of strands.

Advantageously, the ferrule may have an inner part and an outer part, and the portion of the cable shield is sandwiched between the inner part and the outer part.

Advantageously, the inner part may have a shoulder portion arranged to abut the outer part.

This allows for a simplified and more robust electrical connection and fastening, while improving the lifetime. Further, this allows to improve the shield strand orientation and to avoid any broken shield strands. Still further, this allows for a simplified and more robust connection of the components of the ferrule, and a more precise manufacturing.

Advantageously, the extended portion may have at least one first arm crimped on a conductive portion of the second conductive wire.

Advantageously, the extended portion may have at least one second arm crimped on a insulation portion of the second conductive wire.

Advantageously, the extended portion may have at least one attachment arm (or third arm) partly arranged in at least one opening of the outer part.

This allows to provide a simplified and robust connection between the ferrule and the second conductive wire and between the outer part and the ferrule.

Advantageously, the portion of the cable shield is surrounded by the at least one attachment arm.

This allows to provide a simplified and robust connection between the ferrule and cable shield.

Advantageously, the extended portion is integral with the outer part.

This allows for a simplified construction of the ferrule and an easier manufacturing of the electrical cable.

Advantageously, the at least one first arm has at least one recess.

Advantageously, the at least one recess is in a perpendicular direction of the extended portion.

Advantageously, the extended portion extends in a longitudinal direction of the electrical cable.

Advantageously, the first conductive wire has at least one conductive portion, and the electrical cable further has an inner insulation and an outer insulation,
wherein the inner insulation is arranged to surround the at least one conductive portion, and
the cable shield is arranged between the inner insulation and the outer insultation.

Advantageously, the first conductive wire has at least one conductive portion.

Advantageously, the first conductive wire further has an inner insulation and an outer insulation,
wherein the inner insulation is arranged to surround the at least one conductive portion, and
the cable shield is arranged between the inner insulation and the outer insultation.

This allows to provide the electrical cable with an electrical shielding functionality. Thereby, a conductive portion of the second conductive wire is electrically connected with the cable shield.

Advantageously, the second conductive wire is arranged outside the first conductive wire.

This allows to divert the induced current in the cable shield outside the first conductive wire, through the conductive portion of the second conductive wire.

Advantageously, the electrical cable has a plurality of second wires.

Advantageously, the electrical connector has a plurality of first arms arranged to crimp the conductive portions of the plurality of second wires.

Advantageously, the plurality of first arms are arranged to crimp the conductive portions of the plurality of second wires together or separately. **In** other words, one crimp claw may crimp one or more wires.

Advantageously, the plurality of second wires may be placed on opposite sides of the first conductive wire, or close by, or equally spaced.

Advantageously, the plurality of first arms are connected to a plurality of intermediate portions or to a common intermediate portion.

Advantageously, the electrical connector (crimp portion) has a plurality of second arms arranged to be connected to one or more second conductive wires.

Advantageously, the electrical connector (crimp portion) has a plurality of third arms arranged to be connected to one or more second conductive wires.

This allows to connect the cable shield with several second conductive wires, in order to enhance the diversion of induced current in the cable shield or to ensure the function if a connection is missed.

A further aspect of the present disclosure relates to a method as defined in claim 12.

This allows to provide a simplified method for manufacturing an electrical cable having improved shielding functionality while providing a more robust electrical cable, in particular a more robust connection of the cable shield while diverting the induced current in the cable shield.

In addition, this allows to avoid any break of the ferrule after the crimping process. Indeed, the orientation of the free end of the at least one clinched arm allows to reduce the stress and the constraint on the ferrule during and after the crimping process, and allows to avoid or reduce the risk of break or loose of the ferrule, in particular at the level of the at least one clinched arm. That is, this solution eliminates possibility of disconnection during crimping process due to the fact that the at least one clinched arm is perpendicular to the sheet metal movement (i.e. to the movement of the ferrule, or the movement of an inner part or outer part of the ferrule).

The cable shield may be used to electrically protect the first conductive wire from electric and/or electromagnetic noise.

Advantageously, the method further comprises:
- clinching the at least one clinched arm on the other of the two annular portions.

This allows to avoid or reduce any break of the ferrule, in particular during or after the crimping process, as mentioned above.

Advantageously, the method further comprises:
- inserting an inner part of the ferrule below the cable shield,
- sliding an outer part of the ferrule above the cable shield and sliding over, or abutting, the outer part on the inner part of the ferrule.

This allows to place the ferrule over the cable shield. That is, this is particularly useful before the crimping process of the ferrule onto the cable shield.

Advantageously, the method further comprises:
- crimping at least one first arm on a conductive portion of the second conductive wire, and/or
- inserting at least one attachment arm in an opening of an outer part of the ferrule,
- bending the at least one attachment arm on the outer part.

Advantageously, the method further comprises:
- crimping at least one first arm on a conductive portion of the second conductive wire.

Advantageously, the method further has the steps consisting of:
- inserting at least one attachment arm in an opening of an outer part of the ferrule,
- bending the at least one attachment arm on the outer part.

Advantageously, the method further comprises:
- crimping at least one second arm on a insulation portion of the second conductive wire.

This allows to provide a simplified manufacturing of the electrical cable while improving the lifetime and the robustness of the connection.

Advantageously, the method further comprises:
- inserting an inner part of the ferrule below the cable shield,
- sliding an outer part of the ferrule above the cable shield and sliding over, or abutting, the outer part on the inner part of the ferrule.

This allows to provide a simplified and more precise manufacturing of the electrical cable while improving the lifetime and the robustness of the connection.

The method may further comprise:
- crimping at least one first arm on a conductive portion of the second conductive wire,
- inserting at least one attachment arm in an opening of an outer part of the ferrule,
- bending the at least one attachment arm on the outer part.

The method may further has the steps consisting of:
- inserting the outer part on the cable shield and abutting the outer part on a inner part of the ferrule.

Advantageously, the method further comprises:
- crimping the ferrule on the cable shield.

Advantageously, the method further comprises:
- crimping the outer part and/or the inner part on the cable shield.

This allows to have a strong electrical and mechanical connection between the ferrule and the cable shield.

### BRIEF DESCRIPTION OF THE DRAWINGS

Other features and advantages of the present disclosure will appear more clearly from the following detailed description of particular non-limitative examples of the disclosure, illustrated by the appended drawings where:
Figure 1 represents an electrical cable and an electrical connector according to a first embodiment of the present disclosure, with an inner part of a ferrule of the electrical connector represented before introduction on the electrical cable,
Figure 2 represents the electrical cable and the electrical connector, with the inner part after introduction on the electrical cable,
Figure 3 represents the electrical connector, in a perspective view from the top,
Figure 4 represents the electrical connector, in a perspective view from the bottom,
Figure 5 represents the electrical connector, in a view from the longitudinal direction, and a lateral cross-section view,
Figure 6 represents the electrical cable and the electrical connector wherein the electrical cable has a plurality of conductive wire strands therein,
Figure 7 is a diagram illustrating a method for crimping the electrical connector onto an electrical shield of the electrical cable.
Figure 8 represents a conventional ferrule with a protrusion,
Figure 9 represents a conventional electrical connector with a weld,
Figure 10 represents a conventional electrical connector with a clip.

### DETAILED DESCRIPTION

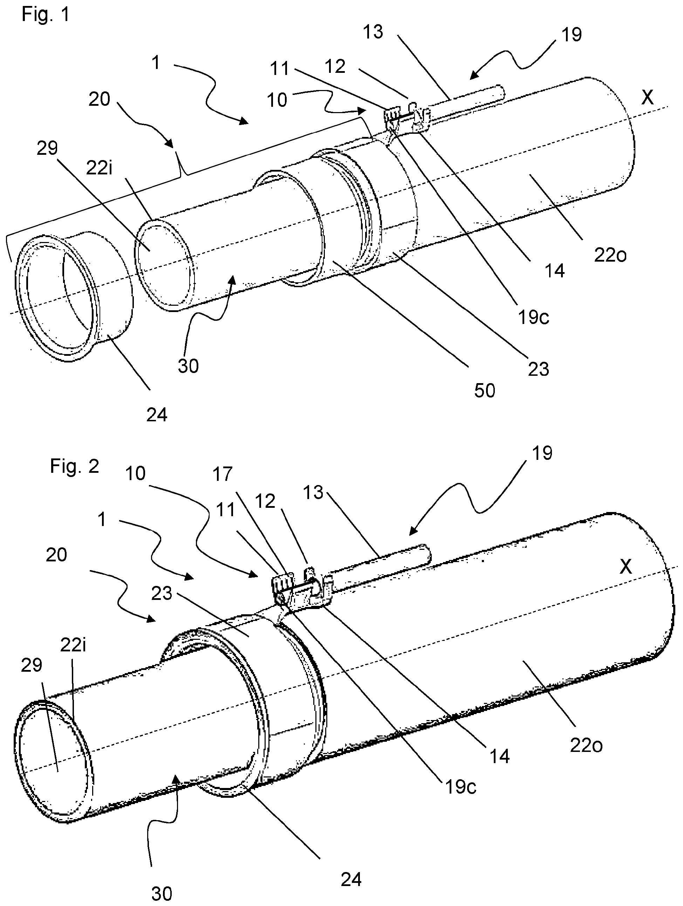

Figure 1 represents an electrical cable 1 and an electrical connector according to the first embodiment of the present disclosure, with an inner part 24 of a ferrule 20 of the electrical connector represented before introduction on the electrical cable 1.

The electrical cable 1 for high voltage current has a first conductive wire 30. The first conductive wire 30 has a conductive portion 29 made out of a conductive material such as metal or copper. The conductive portion 29 is surrounded by an inner insulation 22i and an outer insulation 22o. The electrical cable cross-section (preferably the inner insulation cross section) may be for example from 10 mm² to 240 mm², without being limited to such values.

The electrical cable 1 has a cable shield 50. The cable shield 50 is sandwiched between the inner insulation 22i and the outer insulation 22o. The cable shield 50 is arranged to electrically shield the first conductive wire 30.

That is, the cable shield 50 may protect the first conductive wire 30 from outside electrical or electromagnetic noise or, protect the environment against the electrical or electromagnetic noise of the first conductive wire 30.

The electrical connector has the ferrule 20 having the inner part 24 and an outer part 23.

The inner part 24 and/or the outer part 23 of the ferrule 20 may be made out of a conductive material, such as metal or steel.

The cable shield 50 may be braided and made out of conductive material such as aluminium or steel. The inner insulation 22i and/or the outer insulation 22o may be made out of a insulation material, such as a plastic material.

The electrical cable 1 further has a second conductive wire 19, which has a conductive portion 19c made out of a conductive material such as metal or copper and a insulation portion 13 made out of an insulation material such as a plastic material. The conductive portion 19c may have a cross-sectional diameter of 2.5 mm² or more, without being limited to these values.

The second conductive wire 19 will conduct the electro-magnetic induced current of the cable shield 50 when the ferrule 20 is installed on the electrical cable 1.

The electrical connector has the ferrule 20 and an extended portion 10. The extended portion 10, also called crimp portion 10, has two first arms 11 and two second arms 12, the number of arms or of each type of arms being not limitative. The first arms 11 are represented in figure 1 in an open position, ready to be crimped (or clamped, i.e. in a closed position) onto the conductive portion 19c of the second conductive wire 19. The second arms 12 are represented in an open position, ready to be crimped (or clamped, i.e. in a closed position) onto the insulation portion 13 of the second conductive wire 19.

In an embodiment not illustrated, the crimp portion 10 may have two third arms clamped in a closed position in two openings of the outer part (not shown). The third arms may be inserted in said openings and then bent back on an outer surface of the outer part, so as to link the crimp portion 10 to the ferrule 20. In a preferred embodiment (not shown), the openings are slots, but they may also be in the shape of holes, apertures or grooves. Otherwise, the ferrule 20 and the crimp portion 10 may be integral.

The outer part 23 may be abutted against a shoulder of the inner part 24, so as to be located more precisely.

The inner part 24 and the outer part 23 may be cylindrical. In a preferred embodiment, the inner part 24 and the outer part 23 may be conical.

The extended portion 10 is provided with an intermediate portion 14, linking the first arms 11 and the second arms 12.

In a preferred embodiment, the electrical cable 1 extends in a longitudinal direction X. The same applies for the electrical connector, in particular the ferrule 20 and the extended portion 10, and the second conductive wire 19.

In a preferred embodiment, the ferrule 20 is cylindrical, which means that the outer part 23 and the inner part 24 have a ring portion or sleeve portion.

Figure 2 represents the electrical cable 1 and the electrical connector, with the inner part 24 after introduction on the electrical cable 1.

The reference numbers are kept as far as possible compared to other figures and embodiments, and generally speaking in the whole description.

The cable shield 50 is arranged to be sandwiched between the inner part 24 and the outer part 23, when the outer insulation 22o is removed on the portion of the electrical cable 1 which will receive the ferrule 20. That is to say, the cable shield 50 surrounds the inner part 24 and is surrounded by the outer part 23.

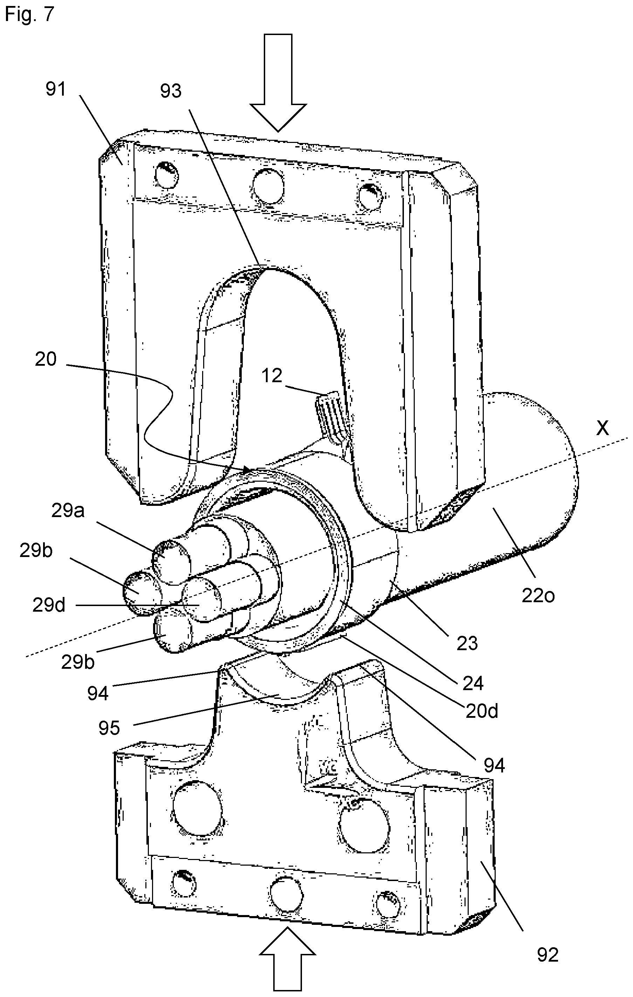

In a preferred embodiment, the inner part 24 is inserted in the cable shield 50 from a first end of the electrical cable 1, while the outer part 23 is inserted onto (or on top of) the cable shield 50 from an opposite end of the electrical cable 1, that is to say the outer part 23 is slid or slipped over or above the cable shield 50. Although it seems less practical due to the shape of the electrical shield 50, the outer part 23 may also be inserted from the same side as per the inner part 24. In this manner, the cable shield 50 is fastened by, and electrically connected with, the inner part 24 and the outer part 23. In a preferred embodiment, the ferrule 20 is crimped onto the cable shield 50, as it will be further explained in reference to figure 7.

Generally speaking, the ferrule 20 may be adapted to different sizes of electrical cables (e.g. cross section) and also different sizes of cable shield. The same applies for the crimp portion 10.

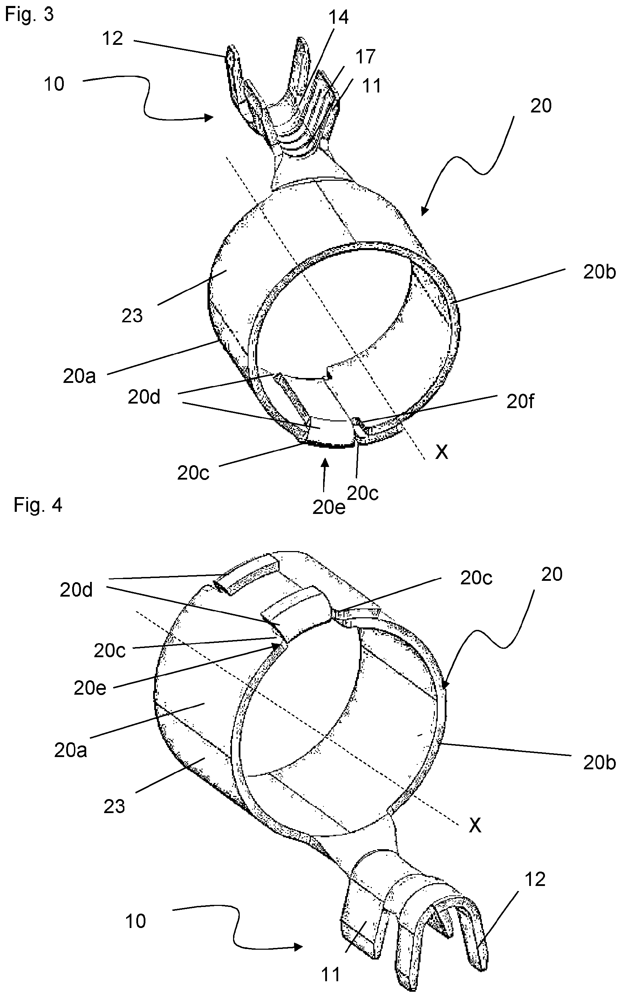

Figure 3 represents the electrical connector, in a perspective view from the top.

The ferrule 20 has the outer part 23 as mentioned above. The extended portion 10 has the first arms 11, the second arms 12 and the intermediate portion 14 therebetween.

In the embodiment with the third arms, they may be inserted in the openings of the outer part 23 and bent thereon, on the outer surface of the outer part 23, so as to clamp (or fix or attach or couple) the extended portion10 with the outer part 23.

The cable shield 50 may be sandwiched between the outer part 23 and the inner part 24, and may be sandwiched, at least on a portion of the cable shield 50 between an inner (or back) portion of the third arms and the inner part.

In a preferred embodiment, the first arms 11 may be provided with at least one recess 17 (for example one, two, three or four recesses, not being limited to that numbers), so as to improve the crimping of the second conductive portion 19c when the first arms 11 are crimped (or pinched) thereto.

The ferrule 20 further has two annular portions 20a, 20b, and one of the two annular portions 20a, 20b has at least one clinched arm 20d arranged to pinch or clinch the other of the two annular portions 20a, 20b. As shown in figure 3, the ferrule has two clinched arms 20d, without being limited to such number. The clinched arm 20d is considered to be an arm with a folded portion as explained here after. The folded portion allows to hold in place a part onto which the clinched arm is folded, or in other words, to fix and be attached with said part. That is, the clinched arm 20d allows to secure (e.g. a driven nail) by bending the protruding point over or to hold together in such a manner.

The electrical cable extends in a longitudinal direction X, and the ferrule 20 is aligned such that the first conductive wire 30 extends through the ferrule 20 in the longitudinal direction X as mentioned above and the at least one clinched arm 20d has a free end folded along the longitudinal direction.

That is to say, the free end of the clinched arm 20d is folded onto the outer (radial) surface of the outer part 23 (i.e onto the outer radial surface of the other annular portion 20a, 20b) so as to fix the two annular portions 20a, 20b together.

The other of the two annular portions 20a, 20b is provided with at least one abutting portion 20c (two in the illustration of figure 3). This allows to provide a better positioning of the two annular portions 20a, 20b, in particular before, during and after the crimping process.

The other of the two annular portions 20a, 20b has at least one recess portion 20e (two in the illustration of figure 3) arranged to receive the at least one clinched arm 20d.

The at least one clinched arm 20d is arranged at an end of the one of the two annular portions 20a, 20b.

In an embodiment, the clinched arms 20d may be provided, for example, like this: one clinched arm 20d at the end (or almost end) of the annular portion, and a second clinched arm 20d in the middle of the annular portion (or at the beginning of the annular portion). Of course, in such case, the recess 20e and the abutting portion 20c are adapted accordingly.

The two annular portions 20a, 20b may be wound so as to form the general cylindrical shape of the ferrule 20.

Figure 4 represents the electrical connector, in a perspective view from the bottom.

The reference numbers are kept as far as possible compared to other figures and embodiments, and generally speaking in the whole description.

The clinched arms 20d are folded along the longitudinal direction, that is to say the rotation axis during the folding or the bending of the clinched arms 20d onto the other annular portion 20a, 20b is perpendicular to the longitudinal direction.

Preferably, the two clinched arms 20d are opposite to each other, when folded on the other of the annular portions 20a, 20b. The one of the annular portion 20a, 20b is provided with a gap between the clinched arm 20d and the rest of the annular portion 20a, 20b, in order to ease the folding of the clinched arm 20d.

In the illustration of figure 4, the clinched arms 20d are provided on the annular portion 20b, while the recesses 20e and the abutting portions 20c are provided on the annular portion 20a. Of course, it is possible to exchange the annular portions 20a and 20b.

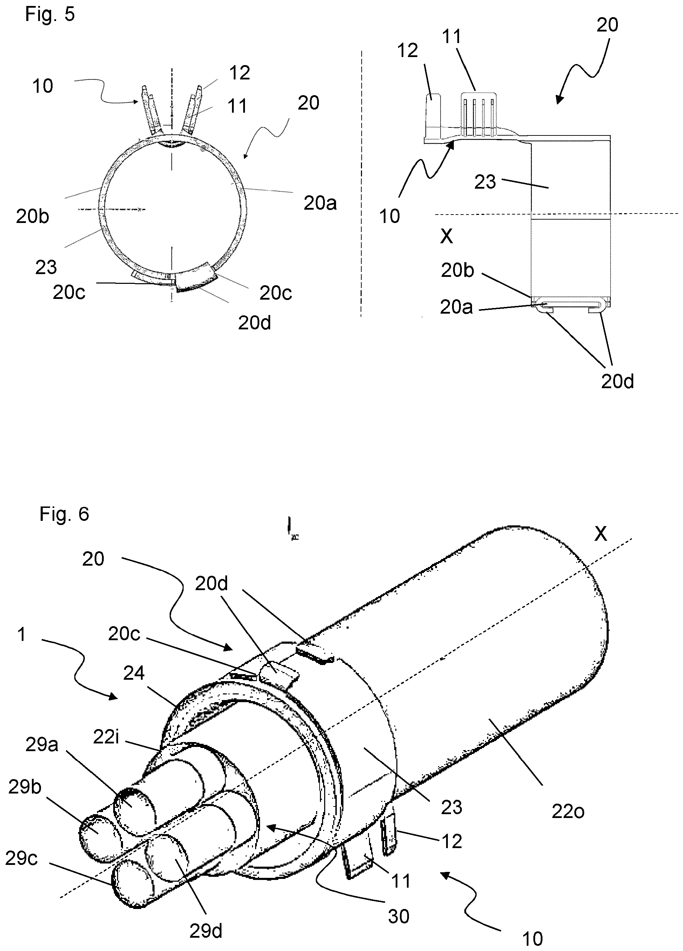

Figure 5 represents the electrical connector, in a view from the longitudinal direction and a lateral cross-section view.

The reference numbers are kept as far as possible compared to other figures and embodiments, and generally speaking in the whole description.

Figure 5 illustrates the folding of the clinched arm 20d onto the other of the annular portion 20a, 20b.

Figure 6 represents the electrical cable 1 and the electrical connector, wherein the first conductive wire 30 has a plurality of wire strands 29a-29d. Each wire strand acts as a conductive portion.

Figure 7 is a diagram illustrating a method for crimping the electrical connector onto an electrical shield of the electrical cable.

The electrical cable 1 and the electrical connector are inserted into an upper half 91 and a bottom half 92 of a tool for crimping the electrical connector onto the cable shield 50 (hidden by the ferrule 20 in the figure 7).

The upper half 91 and the bottom half 92 can be pressed together so as to crimp the ferrule 20 onto the cable shield 50. Indentations 94 of the bottom half 92 may help to better crimp the ferrule 20 onto the cable shield 50, in particular by creating bulged portion on the ferrule 20 (on the outer part 23).

The upper half 91 has an upper receiving portion 93 to receive the upper portion of the ferrule 20, and allow to press the ferrule 20 between the receiving portion 93 and a bottom receiving portion 95 (receiving a bottom portion of the ferrule 20).

The indentations 94 may push the outer part 23 upward, and it is desirable that the fixing system (here the clinched arm 20d) resists to, or is able to avoid (or limit), such upward movement, leading to a radial movement of the outer part 23 in front or nearby the bottom receiving portion 95.

As the clinched arms 20 are folded along the longitudinal direction X, the stress on the ferrule 20 and on the clinched arm 20 is limited or reduced, and accordingly damage to the ferrule 20 is avoided or limited.

This solution eliminates the possibility of disconnection during the crimping process due to the fact that clinched arms are perpendicular to the sheet metal movement (i.e. the sheet metal of the ferrule 20, that is to say the outer part 23 and/or the inner part 24).

Figure 8 represents a conventional ferrule with a protrusion.

As shown in figure 8, a ferrule 120 is provided with a protrusion so as to fix two wounded portions of the ferrule. The protrusion 180 may be broken or weaken during the crimping process, in particular due to the orientation of the folding with a rotation axis in the longitudinal direction X.

Figure 9 represents a conventional electrical connector with a weld.

The ferrule 220 has a weld 280 (long weld or spot weld) so as to fix two wounded portions of the ferrule.

However, in the two latter ferrule 120 and 220, there is a problem of break or reopening of the ferrule when the ferrule is crimped on the electrical shield, in particular when this crimping is done thanks to a press, a tool or the like, or when there are vibrations in use.

That is, the electrical connection between the ferrule and the electrical shield is poor or lost, and the ferrule may fall from the wire or from the electrical shield on which it is crimped.

In addition, there is the possibility to provide the weld 280 on an inner side and on an outer side of the ferrule 220, but it is both not sufficient and costly. The same applies even the weld 280 is fully penetrating the ring of the ferrule 220, so as to have a complete welding: this may not be sufficient to avoid a break of the weld, and this is also time consuming and costly.

Figure 10 represents a conventional electrical connector with a clip.

The cable shield provided with an outer portion 380 in the longitudinal direction X, along with a clip 381 for assembling the outer portion of the electrical shield with a accessory cable 319 (i.e. second cable 319) to be connected with the electrical shield, so as to perform the function of shielding.

That is, with the clip 381, there is a risk to loosen the electrical connection between the braids of both the electrical shield and the accessory cable.

Further, there is a risk of unstable connection resistance, which varies after every cable movement, and a risk of loosening or breaking of the accessory cable, in particular at the level of the clip. The same applies with an assembly with a shrinking tube instead of the clip 381.

It is of course understood that obvious improvements and/or modifications for one skilled in the art may be implemented, still being under the scope of the disclosure as it is defined by the appended claims.

The embodiments may be combined whenever possible.

The steps may be combined and/or inverted whenever possible.

## Claims

1. An electrical connector for a high voltage electrical cable (1), the cable (1) having:
- a first conductive wire (30),
- a second conductive wire (19),
- a cable shield (50) arranged to electrically shield the first conductive wire (30),
wherein the cable (1) extends in a longitudinal direction,
wherein the electrical connector has :
- a crimp portion (10) configured for crimping the second conductive wire (19),
- a ferrule (20) connected to the crimp portion (10) and configured to receive at least a portion of the first conductive wire (30), and
the ferrule (20) is arranged to fasten the cable shield (50) and electrically connect the cable shield (50) with the second conductive wire (19), and the ferrule (20) is aligned such that the first conductive wire (30) extends through the ferrule (20) in the longitudinal direction,
wherein the ferrule (20) has two annular portions (20a, 20b),
**characterized in that** one of the two annular portions (20a, 20b) has at least one clinched arm (20d) arranged to pinch or clinch the other of the two annular portions (20a, 20b),
and **in that** the at least one clinched arm (20d) has a free end folded along the longitudinal direction.

2. The electrical connector according to claim 1, wherein a rotation axis of the clinched arm (20d) during bending or folding of the at least one clinched arm (20d) is perpendicular to the longitudinal direction.

3. The electrical connector according to claim 1 or 2, wherein the other of the two annular portions (20a, 20b) has at least one abutting portion (20c) arranged to abut with the at least one clinched arm (20d).

4. The electrical connector according to any one of claims 1 to 3, wherein the other of the two annular portions (20a, 20b) has at least one recess portion (20e) arranged to receive the at least one clinched arm (20d).

5. The electrical connector according to any one of claims 1 to 4, wherein the at least one clinched arm (20d) is arranged at an end of the one of the two annular portions (20a, 20b).

6. The electrical connector according to any one of claims 1 to 5, wherein the ferrule (20) is arranged to be crimped on a portion of the cable shield (50).

7. The electrical connector according to claim 6, wherein the ferrule (20) has an inner part (24) and an outer part (23), and
wherein the ferrule (20) is arranged to sandwich the portion of the cable shield (50) between the inner part (24) and the outer part (23).

8. The electrical connector according to claim 7, wherein the inner part (24) has a shoulder portion arranged to abut the outer part (23).

9. The electrical connector according to any one of claims 1 to 8, wherein the crimp portion (10) has at least one first arm (11) arranged to be crimped on a conductive portion (19c) of the second conductive wire (19).

10. The electrical connector according to any one of claims 1 to 9, wherein the crimp portion (10) has at least one second arm (12) arranged to be crimped on a insulation portion (13) of the second conductive wire (19).

11. The electrical connector according to any one of claims 1 to 10, wherein the crimp portion (10) is integral with the ferrule (20).

12. A method for manufacturing an electrical cable (1) comprising:
- providing a first conductive wire (30) with a cable shield (50),
- fastening and electrically connecting the electrical connector of any one of claims 1 to 11 with the cable shield (50) and a second conductive wire (19), wherein one of the two annular portions (20a, 20b) has at least one clinched arm (20d) arranged to pinch or clinch the other of the two annular portions (20a, 20b), and wherein the at least one clinched arm (20d) has a free end arranged to be folded along the longitudinal direction.

13. The method according to claim 12, further comprising:
- clinching the at least one clinched arm (20d) on the other of the two annular portions (20a, 20b).

14. The method according to claim 12 or 13, further comprising:
- inserting an inner part (24) of the ferrule (20) below the cable shield (50),
- sliding an outer part (23) of the ferrule (20) above the cable shield (50) and sliding over, or abutting, the outer part (23) on the inner part (24) of the ferrule (20).

15. The method according to any one of claims 12 to 14, further comprising:
- crimping the ferrule (20) on the cable shield (50).

16. The method according to any one of claims 12 to 15, further comprising:
- crimping at least one first arm (11) on a conductive portion (19c) of the second conductive wire (19).

## Patentansprüche

1. Ein elektrischer Verbinder für ein elektrisches Hochspannungskabel (1), wobei das Kabel (1) aufweist:
• einen ersten leitenden Draht (30),
• einen zweiten leitenden Draht (19),
• eine Kabelabschirmung (50), die angeordnet ist, um den ersten leitenden Draht (30) elektrisch abzuschirmen,
• wobei sich das Kabel (1) in einer Längsrichtung erstreckt,
wobei der elektrische Verbinder aufweist:
• einen Crimpabschnitt (10), der zum Crimpen des zweiten leitenden Drahtes (19) konfiguriert ist,
• eine Hülse (20), die mit dem Crimpabschnitt (10) verbunden und konfiguriert ist, um mindestens einen Teil des ersten leitenden Drahtes (30) aufzunehmen, und
die Hülse (20) angeordnet ist, um die Kabelabschirmung (50) zu befestigen und die Kabelabschirmung (50) mit dem zweiten leitenden Draht (19) elektrisch zu verbinden, und die Hülse (20) so ausgerichtet ist, dass sich der erste leitende Draht (30) durch die Hülse (20) in der Längsrichtung erstreckt,
wobei die Hülse (20) zwei ringförmige Abschnitte (20a, 20b) aufweist,
**dadurch gekennzeichnet, dass** einer der beiden ringförmigen Abschnitte (20a, 20b) mindestens einen Klemmarm (20d) aufweist, der angeordnet ist, um den anderen der beiden ringförmigen Abschnitte (20a, 20b) zu klemmen oder zu verclinchen,
und dass der mindestens eine Klemmarm (20d) ein freies Ende aufweist, das entlang der Längsrichtung gefaltet ist.

2. Elektrischer Verbinder nach Anspruch 1, wobei eine Drehachse des Klemmarms (20d) während des Biegens oder Faltens des mindestens einen Klemmarms (20d) senkrecht zur Längsrichtung ist.

3. Elektrischer Verbinder nach Anspruch 1 oder 2, wobei der andere der beiden ringförmigen Abschnitte (20a, 20b) mindestens einen Anlageabschnitt (20c) aufweist, der angeordnet ist, um an dem mindestens einen Klemmarm (20d) anzuliegen.

4. Elektrischer Verbinder nach einem der Ansprüche 1 bis 3, wobei der andere der beiden ringförmigen Abschnitte (20a, 20b) mindestens einen Aussparungsabschnitt (20e) aufweist, der angeordnet ist, um den mindestens einen Klemmarm (20d) aufzunehmen.

5. Elektrischer Verbinder nach einem der Ansprüche 1 bis 4, wobei der mindestens eine Klemmarm (20d) an einem Ende des einen der beiden ringförmigen Abschnitte (20a, 20b) angeordnet ist.

6. Elektrischer Verbinder nach einem der Ansprüche 1 bis 5, wobei die Hülse (20) angeordnet ist, um auf einen Abschnitt der Kabelabschirmung (50) gecrimpt zu werden.

7. Elektrischer Verbinder nach Anspruch 6, wobei die Hülse (20) einen inneren Teil (24) und einen äußeren Teil (23) aufweist, und wobei die Hülse (20) angeordnet ist, um den Abschnitt der Kabelabschirmung (50) zwischen dem inneren Teil (24) und dem äußeren Teil (23) sandwichartig anzuordnen.

8. Elektrischer Verbinder nach Anspruch 7, wobei der innere Teil (24) einen Schulterabschnitt aufweist, der angeordnet ist, um an dem äußeren Teil (23) anzuliegen.

9. Elektrischer Verbinder nach einem der Ansprüche 1 bis 8, wobei der Crimpabschnitt (10) mindestens einen ersten Arm (11) aufweist, der angeordnet ist, um auf einen leitenden Abschnitt (19c) des zweiten leitenden Drahtes (19) gecrimpt zu werden.

10. Elektrischer Verbinder nach einem der Ansprüche 1 bis 9, wobei der Crimpabschnitt (10) mindestens einen zweiten Arm (12) aufweist, der angeordnet ist, um auf einen Isolationsabschnitt (13) des zweiten leitenden Drahtes (19) gecrimpt zu werden.

11. Elektrischer Verbinder nach einem der Ansprüche 1 bis 10, wobei der Crimpabschnitt (10) einstückig mit der Hülse (20) ausgebildet ist.

12. Ein Verfahren zur Herstellung eines elektrischen Kabels (1), umfassend:
• Bereitstellen eines ersten leitenden Drahtes (30) mit einer Kabelabschirmung (50),
• Befestigen und elektrisches Verbinden des elektrischen Verbinders nach einem der Ansprüche 1 bis 11 mit der Kabelabschirmung (50) und einem zweiten leitenden Draht (19), wobei einer der beiden ringförmigen Abschnitte (20a, 20b) mindestens einen Klemmarm (20d) aufweist, der angeordnet ist, um den anderen der beiden ringförmigen Abschnitte (20a, 20b) zu klemmen oder zu verclinchen, und wobei der mindestens eine Klemmarm (20d) ein freies Ende aufweist, das angeordnet ist, um entlang der Längsrichtung gefaltet zu werden.

13. Verfahren nach Anspruch 12, ferner umfassend:
• Verclinchen des mindestens einen Klemmarms (20d) an dem anderen der beiden ringförmigen Abschnitte (20a, 20b).

14. Verfahren nach Anspruch 12 oder 13, ferner umfassend:
• Einsetzen eines inneren Teils (24) der Hülse (20) unter die Kabelabschirmung (50),
• Schieben eines äußeren Teils (23) der Hülse (20) über die Kabelabschirmung (50) und Schieben über den oder Anlegen des äußeren Teils (23) an den inneren Teil (24) der Hülse (20).

15. Verfahren nach einem der Ansprüche 12 bis 14, ferner umfassend:
• Crimpen der Hülse (20) auf die Kabelabschirmung (50).

16. Verfahren nach einem der Ansprüche 12 bis 15, ferner umfassend:
• Crimpen mindestens eines ersten Arms (11) auf einen leitenden Abschnitt (19c) des zweiten leitenden Drahtes (19).

## Revendications

1. **Connecteur** électrique pour un câble électrique haute tension (1), le câble (1) ayant :
• un premier fil conducteur (30),
• un second fil conducteur (19),
• un blindage de câble (50) agencé pour blinder électriquement le premier fil conducteur (30), dans lequel le câble (1) s'étend dans une direction longitudinale,
dans lequel
le connecteur électrique a :
∘ une partie de sertissage (10) configurée pour sertir le second fil conducteur (19),
∘ une férule (20) connectée à la partie de sertissage (10) et configurée pour recevoir au moins une partie du premier fil conducteur (30),
et la férule (20) est agencée pour fixer le blindage de câble (50) et pour connecter électriquement le blindage de câble (50) avec le second fil conducteur (19), et la férule (20) est alignée de telle sorte que le premier fil conducteur (30) s'étend à travers la férule (20) dans la direction longitudinale,
dans lequel la férule (20) a deux parties annulaires (20a, 20b),
**caractérisé en ce que** l'une des deux parties annulaires (20a, 20b) a au moins un bras de pincement (20d) agencé pour pincer ou serrer l'autre des deux parties annulaires (20a, 20b), et **en ce que** l'au moins un bras de pincement (20d) a une extrémité libre repliée le long de la direction longitudinale.

2. Le connecteur électrique selon la revendication 1, dans lequel un axe de rotation du bras de pincement (20d) pendant le pliage ou le repliage de l'au moins un bras de pincement (20d) est perpendiculaire à la direction longitudinale.

3. Le connecteur électrique selon la revendication 1 ou 2, dans lequel l'autre des deux parties annulaires (20a, 20b) a au moins une partie de butée (20c) agencée pour venir en butée contre l'au moins un bras de pincement (20d).

4. Le connecteur électrique selon l'une quelconque des revendications 1 à 3, dans lequel l'autre des deux parties annulaires (20a, 20b) a au moins une partie d'évidement (20e) agencée pour recevoir l'au moins un bras de pincement (20d).

5. Le connecteur électrique selon l'une quelconque des revendications 1 à 4, dans lequel l'au moins un bras de pincement (20d) est agencé à une extrémité de l'une des deux parties annulaires (20a, 20b).

6. Le connecteur électrique selon l'une quelconque des revendications 1 à 5, dans lequel la férule (20) est agencée pour être sertie sur une partie du blindage de câble (50).

7. Le connecteur électrique selon la revendication 6, dans lequel la férule (20) a une partie intérieure (24) et une partie extérieure (23), et dans lequel la férule (20) est agencée pour prendre en sandwich la partie du blindage de câble (50) entre la partie intérieure (24) et la partie extérieure (23).

8. Le connecteur électrique selon la revendication 7, dans lequel la partie intérieure (24) a une partie d'épaulement agencée pour venir en butée contre la partie extérieure (23).

9. Le connecteur électrique selon l'une quelconque des revendications 1 à 8, dans lequel la partie de sertissage (10) a au moins un premier bras (11) agencé pour être serti sur une partie conductrice (19c) du second fil conducteur (19).

10. Le connecteur électrique selon l'une quelconque des revendications 1 à 9, dans lequel la partie de sertissage (10) a au moins un second bras (12) agencé pour être serti sur une partie d'isolation (13) du second fil conducteur (19).

11. Le connecteur électrique selon l'une quelconque des revendications 1 à 10, dans lequel la partie de sertissage (10) est d'un seul tenant avec la férule (20).

12. Procédé de fabrication d'un câble électrique (1) comprenant :
• la fourniture d'un premier fil conducteur (30) avec un blindage de câble (50),
• la fixation et la connexion électrique du connecteur électrique selon l'une quelconque des revendications 1 à 11 avec le blindage de câble (50) et un second fil conducteur (19), dans lequel l'une des deux parties annulaires (20a, 20b) a au moins un bras de pincement (20d) agencé pour pincer ou serrer l'autre des deux parties annulaires (20a, 20b), et dans lequel l'au moins un bras de pincement (20d) a une extrémité libre agencée pour être repliée le long de la direction longitudinale.

13. Le procédé selon la revendication 12, comprenant en outre :
• le pincement de l'au moins un bras de pincement (20d) sur l'autre des deux parties annulaires (20a, 20b).

14. Le procédé selon la revendication 12 ou 13, comprenant en outre :
• l'insertion d'une partie intérieure (24) de la férule (20) sous le blindage de câble (50),
• le glissement d'une partie extérieure (23) de la férule (20) au-dessus du blindage de câble (50) et le glissement par-dessus, ou la mise en butée, de la partie extérieure (23) sur la partie intérieure (24) de la férule (20).

15. Le procédé selon l'une quelconque des revendications 12 à 14, comprenant en outre :
• le sertissage de la férule (20) sur le blindage de câble (50).

16. Le procédé selon l'une quelconque des revendications 12 à 15, comprenant en outre :
• le sertissage d'au moins un premier bras (11) sur une partie conductrice (19c) du second fil conducteur (19).
